# EUROPEAN PATENT SPECIFICATION

(11) **EP 3 220 602 B1**
(45) Date of publication and mention of the grant of the patent: **12.02.2020**
(21) Application number: 17161297.1
(22) Date of filing: 16.03.2017
(51) Int. Cl.: H04L 29/06, H04L 9/32, H04L 29/08

(54) **METHOD AND DEVICE FOR ACCESSING SMART CAMERA**
VERFAHREN UND VORRICHTUNG ZUM ZUGRIFF AUF EINE INTELLIGENTE KAMERA
PROCÉDÉ ET DISPOSITIF D'ACCÈS À UNE CAMÉRA INTELLIGENTE

(30) Priority: 18.03.2016 CN 201610158947
(43) Date of publication of application: 20.09.2017
(73) Proprietor: Beijing Xiaomi Mobile Software Co., Ltd., Beijing 100085 (CN)
(72) Inventor: CHEN, Hong, Beijing, 100085 (CN); GAO, Ziguang, Beijing, 100085 (CN); HOU, Enxing, Beijing, 100085 (CN)
(74) Representative: Grunert, Marcus

(56) References cited:
- CN-A- 104 243 250
- CN-A- 106 209 816
- US-A1- 2015 022 666
- US-A1- 2015 222 601
- US-B1- 9 179 105

## Description

### TECHNICAL FIELD

The present invention generally relates to the network communication technology field, and more particularly, to a method and device for accessing a smart camera.

### BACKGROUND

With the increasing development of network communication technology, a smart camera for video surveillance is widely used. In the related art, a user may access the smart camera through the Internet at any time, and thus it is convenient for the user to perform the video surveillance. However, if the user terminal cannot access the Internet, it cannot access the smart camera, which increases the difficulty for the user to access the smart camera.

US 2015/222601 A1 discloses a system of secure control of a smart camera and transfer a media content from and to smart camera by a user communication device and an intermediate server, comprising: a smart camera, intermediate server and user communication device which are connected to WAN.

US 9179105 B1 discloses a control of video camera with privacy feedback. A computing device may include one or more lenses and one or more blocking mechanisms, wherein the one or more blocking mechanisms are configured to selectively block the one or more lenses from capturing video images, and wherein the one or more blocking mechanisms include a physical body that provides visible feedback that the one or more lenses are blocked.

### SUMMARY

The invention is defined in the independent claims.

In order to overcome problems existing in the related art, embodiments of the present invention provide a method and device for accessing a smart camera.

According to a first aspect of embodiments of the present invention, there is provided a method for accessing a smart camera, including:
detecting access media for accessing a first smart camera;
generating a first access request corresponding to the access media if it is detected that the access media is local area network, in which the first access request carries an access password, and the access password comprises a token issued by a server; and
sending the first access request to the first smart camera, such that the first smart camera accepts an access after verifying the access password in the first access request successfully; the method further comprises: receiving the token and a validity period of the token issued by the server; judging, whether the validity period of the token has passed; and
determining the token as the access password if the validity period of the token has not passed.

Preferably, generating a first access request corresponding to the access media includes:
acquiring the access password; and
adding the access password into the first access request.

Preferably, acquiring the access password includes:
outputting an access password input interface; and
receiving the access password inputted by the user in the access password input interface.

Preferably, acquiring the access password includes:
acquiring the token issued by the server; and
determining the token as the access password.

Preferably,
the token is generated randomly by the server after the server receives a password acquiring request sent by the first smart camera, and is sent by the server to a terminal and the first smart camera simultaneously; or the token is generated by the server periodically, and is sent by the server to a terminal and the first smart camera simultaneously.

According to a second aspect of embodiments of the present invention, there is provided a method for accessing a smart camera. The method includes:
receiving a first access request sent by a terminal through local area network, in which the first access request carries an access password, wherein the access password comprises a token issued by a server;
verifying the access password, comprising: judging whether the access password is the same as a token stored in local, wherein the token is a password issued by a server; judging whether a validity period of the token has passed if the access password is the same as the token; and determining that the access password is verified successfully if the validity period of the token has not passed; and
accepting an access of the terminal if the access password is verified successfully.

Preferably, the method further includes:
receiving the appointed password sent by the terminal, in which the appointed password is a password appointed by the terminal and the first smart camera.

Preferably, the method further includes:
sending a password acquiring request to the server, such that the server generates the token randomly according to the password acquiring request and sends the token to the terminal and the first smart camera simultaneously; and
receiving the token and the validity period of the token issued by the server.

According to a third aspect of the present invention, there is provided a device for accessing a smart camera, including:
a detecting module, configured to detect access media for accessing a first smart camera;
a first access request generating module, configured to generate a first access request corresponding to the access media if it is detected that the access media is local area network, in which the first access request carries an access password, and the access password comprises a token issued by a server; and
a first sending module, configured to send the first access request to the first smart camera, such that the first smart camera accepts an access after verifying the access password in the first access request successfully, wherein the device further comprises a receiving module, configured to receive the token and a validity period of the token issued by the server; the first access request generating module is further configured to: judge whether the validity period of the token has passed; and determine the token as the access password if the validity period of the token has not passed.

Preferably,
the token is generated randomly by the server after the server receives a password acquiring request sent by the first smart camera, and is sent by the server to a terminal and the first smart camera simultaneously; or the token is generated by the server periodically, and is sent by the server to a terminal and the first smart camera simultaneously.

According to a fourth aspect of the present invention, there is provided a device for accessing a smart camera, including:
a first receiving module, configured to receive a first access request sent by a terminal through local area network, in which the first access request carries an access password, wherein the access password comprises a token issued by a server;
a verifying module, configured to verify the access password; and
a first accepting module, configured to accept an access of the terminal if the access password is verified successfully, wherein, the verifying module is further configured to: judge whether the access password is the same as a token stored in local, in which the token is a password issued by a server; judge whether a validity period of the token has passed if the access password is the same as the token; and determine that tha access password is verified successfully if the validity period of the token has not passed.

Preferably, the verifying module includes:
a first judging sub-module, configured to judge whether the access password is the same as an appointed password stored in local; and
a first determining sub-module, configured to determine that the access password is verified successfully if the access password is the same as the appointed password. Preferably, the device further includes:
a second receiving module, configured to receive the appointed password sent by the terminal, in which the appointed password is a password appointed by the terminal and the first smart camera.

Preferably, the device further includes:
a sending module, configured to send a password acquiring request to the server, such that the server generates the token randomly according to the password acquiring request and sends the token to the terminal and the first smart camera simultaneously; and
a third receiving module, configured to receive the token and an validity period of the token issued by the server.

The technical solution provided in embodiments of the present invention may have advantageous effects as follows.

The terminal in the present disclosure may detect the access media for accessing the first smart camera, generate a corresponding first access request carrying the access password if it is detected that the access media is local area network, and send the first access request to the first smart camera to enable the first smart camera to accept the access after access password in the first access request is successfully verified by the first smart camera, such that the first smart camera may be accessed by adopting an access authentication mechanism based on local devices if the terminal and the first smart camera are located in the same local area network but cannot access the Internet, thus improving the safety of accessing the smart camera, satisfying user's personal requirement for accessing the smart camera, and improving user experience.

The terminal in the present invention may also acquire the access password in many ways, and add the acquired access password into the first access request for being used by the first smart camera to perform a safety verification. The access password may be a password preset by the terminal, a password inputted by the user, or a password issued by the server, i.e. the scope of source of the password is expanded, thus improving the efficiency and practicability of accessing the smart camera.

The terminal in the present invention may also detect the access media for accessing the first smart camera, acquire the token issued by the server if it is detected that the access media is local area network, judge whether the validity period of the token has passed. If the validity period of the token has not passed, the terminal may determine the token as the access password, add the access password into the first access request and send the first access request to the first smart camera, such that after the validity period of the token has passed, the terminal cannot access the first smart camera through the local area network but wait for another valid token issued by the server, thus improving the safety and reliability of accessing the smart camera.

The first smart camera in the present invention may receive the first access request carrying the access password sent by the terminal through the local area network, verify the access password and accept the access of the terminal if the access password is successfully verified, such that the first access request may be verified by adopting an access authentication mechanism based on local devices if the terminal and the first smart camera are located in the same local area network but cannot access the Internet, thus improving the safety of accessing the smart camera, satisfying user's personal requirement for accessing the smart camera, and improving user experience.

The first smart camera in the present invention may also receive the first access request carrying the access password sent by the terminal through the local area network, judge whether the access password is the same as the token stored in local and issued by the server, and judge whether the validity period of the token has passed if the access password is the same as the token. If the validity period of the token has not passed, it is determined that the access password is verified successfully, and the first smart camera accepts the access of the terminal. In this way, if the validity period of the token has passed, the first smart camera cannot accept the access of the terminal, such that the safety and reliability of accessing the smart camera are improved.

It is to be understood that both the foregoing general description and the following detailed description are exemplary and explanatory only and are not restrictive of the present invention.

### BRIEF DESCRIPTION OF THE DRAWINGS

The drawings shown herein, which are incorporated in and constitute a part of the specification, illustrate embodiments of the present invention and used for explaining the principle of the present invention together with the specification.
Fig. 1 shows a flow chart of a method for accessing a smart camera according to an example embodiment of the present invention.
Fig. 2 shows a flow chart of another method for accessing a smart camera according to an example embodiment of the present invention.
Fig. 3 shows a flow chart of another method for accessing a smart camera according to an embodiment of the present invention.
Fig. 4 shows a flow chart of a method for accessing a smart camera according to an example embodiment of the present invention.
Fig. 5 shows a flow chart of another method for accessing a smart camera according to an example embodiment of the present invention.
Fig. 6 shows a schematic diagram illustrating an application scenario of a method for accessing a smart camera according to an embodiment of the present invention.
Fig. 7 shows a block diagram of a device for accessing a smart camera according to an example embodiment of the present invention.
Fig. 8 shows a block diagram of another device for accessing a smart camera according to an example embodiment of the present invention.
Fig. 9 shows a block diagram of another device for accessing a smart camera according to an example embodiment of the present invention.
Fig. 10 shows a block diagram of another device for accessing a smart camera according to an example embodiment of the present invention.
Fig. 11 shows a block diagram of another device for accessing a smart camera according to an example embodiment of the present invention.
Fig. 12 shows a block diagram of another device for accessing a smart camera according to an example embodiment of the present invention.
Fig. 13 shows a block diagram of another device for accessing a smart camera according to an example embodiment of the present invention.
Fig. 14 shows a block diagram of a device for accessing a smart camera according to an example embodiment of the present invention.
Fig. 15 shows a block diagram of another device for accessing a smart camera according to an example embodiment of the present invention.
Fig. 16 shows a block diagram of another device for accessing a smart camera according to an example embodiment of the present invention.
Fig. 17 shows a block diagram of another device for accessing a smart camera according to an example embodiment of the present invention.
Fig. 18 shows a block diagram of another device for accessing a smart camera according to an example embodiment of the present invention.
Fig. 19 shows a block diagram of another device for accessing a smart camera according to an example embodiment of the present invention.
Fig. 20 shows a block diagram of a device for accessing a smart camera according to an example embodiment of the present invention.

### DETAILED DESCRIPTION

Now the example embodiments will be described in detail, in which the examples are shown in the accompanying drawings. In the specification with reference to the drawings, unless specified or limited otherwise, the same or similar elements and the elements having same or similar functions are denoted by like reference numerals. The implementations described in the following example embodiments do not represent all implementations of the present invention. Instead, they are merely examples of the device and method consistent with some aspects of the present invention described by the appended claims.

Terms used herein in the description of the present invention are only for the purpose of describing specific embodiments, but should not be construed to limit the present invention. As used in the description of the present invention and the appended claims, "a" and "the" in singular forms mean including plural forms, unless clearly indicated in the context otherwise. It should also be understood that, as used herein, the term "and/or" represents and contains any one and all possible combinations of one or more associated listed items.

Although terms such as "first", "second" and "third" are used herein for describing various elements, these elements should not be limited by these terms. These terms are only used for distinguishing one element from another element. For example, a first sequencing criterion may also be called a second sequencing criterion, and similarly, the second sequencing criterion may also be called the first sequencing criterion, without departing from the scope of the present invention. As used herein, the term "if' may be construed to mean "when" or "upon" or "in response to determining" or "in accordance with a determination" or "in response to detecting," that a stated condition precedent is true, depending on the context.

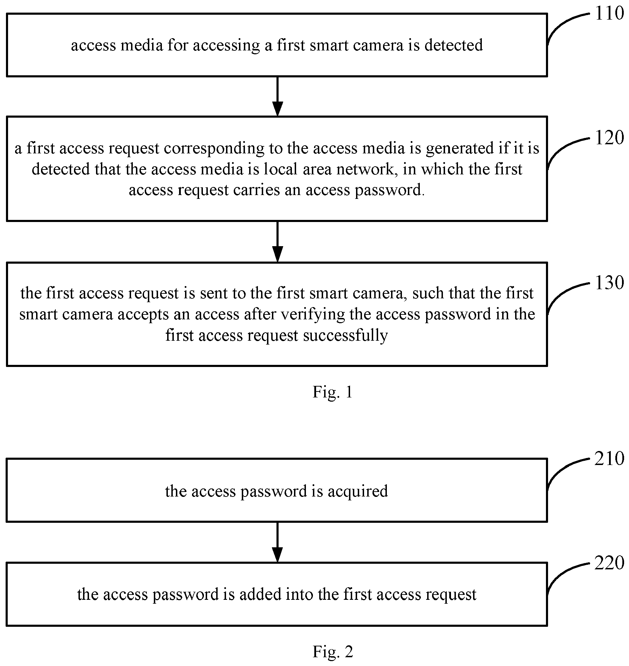

Fig. 1 shows a flow chart of a method for accessing a smart camera according to an example embodiment of the present invention. As shown in Fig. 1, the method may be applied in a terminal and includes steps as follows.

At block 110, access media for accessing a first smart camera is detected.

The terminal in the present disclosure may be any smart terminal having a function of surfing the Internet, such as a mobile phone, a tablet PC, and a personal digital assistant. The terminal may access a router through wireless local area network, and access a server on public network through the router.

The access media in the present disclosure may be Internet, or local area network.

In an embodiment of the present disclosure, the terminal accesses the first smart camera, so as to monitor videos collected by the first smart camera or to adjust various performances of the first smart camera.

At block 120, a first access request corresponding to the access media is generated if it is detected that the access media is local area network, in which the first access request carries an access password.

In an embodiment of the present invention, there is provided a safe access authentication mechanism based on local devices, which is used when the terminal and the first smart camera are located in the same local area network but cannot access the Internet. In the access authentication mechanism based on local devices, the terminal and the first smart camera may perform an authentication by adopting a password verification method. As a result, the access request sent by the terminal to the first smart camera needs to carry the access password.

At block 130, the first access request is sent to the first smart camera, such that the first smart camera accepts an access after verifying the access password in the first access request successfully.

It can be seen from the above embodiment that, by detecting the access media for accessing the first smart camera, generating the corresponding first access request carrying the access password if it is detected that the access media is the local area network, and sending the first access request to the first smart camera to enable the first smart camera to accept the access after the access password in the first access request is verified successfully by the first smart camera, the first smart camera may be accessed by adopting the access authentication mechanism based on local devices when the terminal and the first smart camera are located in the same local area network but cannot access the Internet, such that the safety of accessing the smart camera is improved, user's personal requirement for accessing the smart camera is satisfied, and user experience is improved.

As shown in Fig. 2, Fig. 2 is a flow chart of another method for accessing a smart camera according to an example embodiment of the present invention, and the method may be applied in a terminal. Based on the method shown in Fig. 1, the act of generating the corresponding first access request carrying the access password at block 120 may include following acts.

At block 210, the access password is acquired.

In an embodiment of the present disclosure, the access password may be a password preset by the terminal, a password inputted by a user, or a password issued by a server.

The method of acquiring the access password includes, but is not limited the following two ways.

Way one, the access password is an access password inputted by the user, which may be acquired as follows.
(1) an access password input interface is outputted.
(2) the access password inputted by the user in the access password input interface is received.

In addition, for way one, before accessing the first smart camera, it is required to set an appointed password with the first smart camera, and send the appointed password to the first smart camera, such that the first smart camera stores the appointed password, and accepts the access after determining that the appointed password is the same as the access password inputted by the user and contained in the first access request.

In an embodiment of the present invention, in a situation of accessing to the Internet, the terminal may send the appointed password to the first smart camera in advance, such that the appointed password may be used when the terminal and the first smart camera are located in the same local area network but cannot access the Internet. The appointed password may be a password specified by the user.

Way two, the access password is a token issued by the server, which may be acquired as follows.
(1) the token issued by the server is acquired.
(2) the token is determined as the access password. In addition, for way two, in a situation of accessing to the Internet, the terminal may receive the token issued by the server, and update the stored token with the newly received token, such that the access password carried in the first access request is the newly received token. The token may be a piece of string generated randomly by the server according to a password acquiring request of the first smart camera and sent to the first smart camera and the terminal respectively, and stored by the first smart camera and the terminal. In addition, the token has an validity period. For example, if the validity period of the token is an hour, the token loses efficacy an hour later.

At block 220, the access password is added into the first access request.

It can be seen from the above embodiment that, the access password may be acquired in many ways, and the acquired access password is added into the first access request so as to be used by the first smart camera to perform a security verification. The access password may be a password preset by the terminal, a password inputted by the user, or a password issued by the server, such that the scope of source of the access password is expanded, thus improving the efficiency and availability of accessing the smart camera.

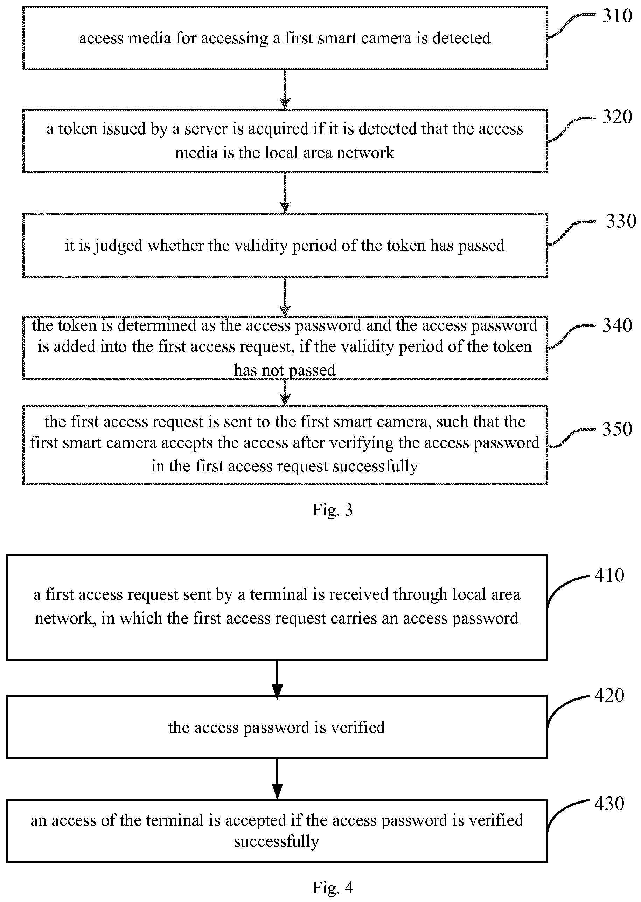

As shown in Fig. 3, Fig. 3 is a flow chart of another method for accessing a smart camera according to an example embodiment of the present invention, and the method may be applied in a terminal. Based on the method shown in Fig. 1, the method may further include following acts.

At block 310, access media for accessing a first smart camera is detected.

At block 320, a token issued by a server is acquired if it is detected that the access media is the local area network.

In an embodiment of the present invention, the method of triggering the server to issue the token include, but is not limited to the following two ways.

Way one, the first smart camera may send a password acquiring request to the server periodically. After receiving the password acquiring request sent by the first smart camera, the server may randomly generate a piece of string as the token, and send the token to the terminal and the first smart camera simultaneously.

For example, the first smart camera sends the password acquiring request to the server once every hour.

Way two, the server may generate the token periodically, and send the token to the terminal and the first smart camera simultaneously.

For example, the server may issue the token to the terminal and the first smart camera once every hour, and a validity period of the token is one hour.

Therefore, the token received by the terminal, may be generated randomly by the server after the server receives the password acquiring request sent by the first smart camera and sent by the server to the terminal and the first smart camera simultaneously. Or, the token may be generated by the server periodically and sent by the server to the terminal and the first smart camera simultaneously.

The server sends the token to the terminal and the first smart camera simultaneously, so that the terminal may configure the token as the access password when accessing the first smart camera, after the terminal receives the token.

In addition, the terminal may also receive the validity period of the token issued by the server after receiving the token issued by the server.

At block 330, it is judged whether the validity period of the token has passed.

At block 340, the token is determined as the access password and the access password is added into the first access request, if the validity period of the token has not passed.

In an embodiment of the present invention, if the validity period of the token has not passed, it indicates that the token is still valid, such that the token may be determined as the access password. If the validity period of the token has passed, it indicates that the token is invalid, such that the token cannot be determined as the access password.

For example, the validity period of the token issued by the server is one hour. If the first smart camera is accessed during the validity period, the token may be used as the access password. If the validity period has passed, the terminal cannot access the first smart camera through the local area network, but wait for acquiring a new token after accessing the Internet.

At block 350, the first access request is sent to the first smart camera, such that the first smart camera accepts the access after verifying the access password in the first access request successfully.

It can be seen from the above embodiment that, the access media for accessing the first smart camera is detected, the token issued by the server is acquired if it is detected that the access media is the local area network, and it is judged whether the validity period of the token has passed. If the validity period of the token has not passed, the token is determined as the access password, the access password is added into the first access request and the first access request is sent to the first smart camera, such that after the validity period of the token has passed, the terminal cannot access the first smart camera through the local area network but wait for another valid token issued by the server, thus improving the safety and reliability of accessing the smart camera.

As shown in Fig. 4, Fig. 4 is a flow chart of a method for accessing a smart camera according to an example embodiment of the present invention, and the method may be applied in a first smart camera. The first smart camera is a smart camera to be accessed, and the method may include following acts.

At block 410, a first access request sent by a terminal is received through local area network, in which the first access request carries an access password. The access password may be a password preset by the terminal, a password inputted by a user or a password issued by a server.

At block 420, the access password is verified.

The method of verifying the access password includes, but is not limited to the following two ways.

Way one, the access password may be the password preset by the terminal or the password inputted by the user. The verification process may include followings.
(1) it is judged whether the access password is the same as an appointed password stored in local.
(2) if the access password is the same as the appointed password, it is determined that the access password is verified successfully.

In addition, for way one, the first smart camera may receive the appointed password sent by the terminal in advance. The appointed password may be appointed by the terminal and the first smart camera. Moreover, the appointed password may be set by the terminal according to actual situations, or may be specified by the user.

Way two, the access password is the password issued by the server, which may be verified as follows.
(1) it is judged whether the access password is the same as a token stored in local, in which the token is the password issued by the server.
(2) if the access password is the same as the token, it is determined that the access password is verified successfully.

In addition, for way two, the first smart camera may send a password acquiring request to the server, and receive and store the token issued by the server, and update the stored token with the newly received token when storing the token. The token may be a piece of string generated randomly by the server according to the password acquiring request of the first smart camera and sent to the first smart camera and the terminal respectively, such that the first smart camera and the terminal store the token. The token has a validity period. For example, if the validity period of the token is one hour, the token becomes invalid one hour later.

At block 430, an access of the terminal is accepted if the access password is verified successfully.

It can be seen from above embodiment that, by receiving the first access request carrying the access password sent by the terminal through the local area network, verifying the access password and accepting the access of the terminal if the access password is verified successfully, the first access request may be verified by adopting an access authentication mechanism based on local devices when the first smart camera and the terminal are located in the same local area network but cannot access the Internet, such that the safety of accessing the smart camera is improved, user's personal requirement for accessing the smart camera is satisfied, and user experience is improved.

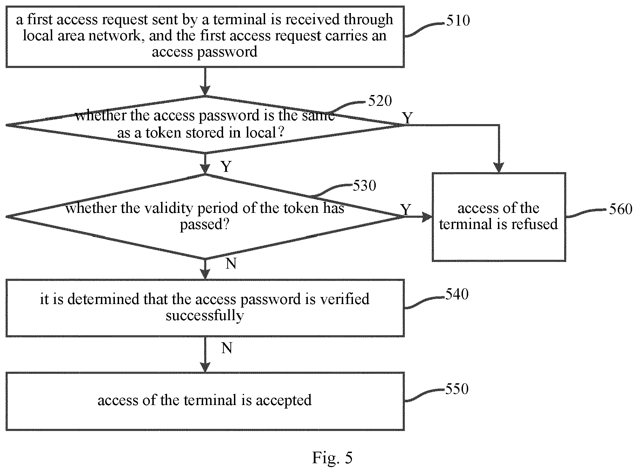

As shown in Fig. 5, Fig. 5 is a flow chart of another method for accessing a smart camera according to an example embodiment of the present invention, and the method may be applied in a first smart camera. Based on the method shown in Fig. 4, the method may include following acts.

At block 510, a first access request sent by a terminal is received through local area network, in which the first access request carries an access password.

At block 520, it is judged whether the access password is the same as a token stored in local, in which the token is a password issued by a server. If the access password is the same as the token, block 530 is executed; otherwise, block 560 is executed.

In an embodiment of the present invention, the method of triggering the server to issue the token include, but is not limited to the following two ways.

Way one, the first smart camera may send a password acquiring request to the server periodically. After receiving the password acquiring request sent by the first smart camera, the server may randomly generate a piece of string as the token, and send the token to the terminal and the first smart camera simultaneously.

For example, the first smart camera sends the password acquiring request to the server once every hour.

Way two, the server may generate the token periodically, and send the token to the terminal and the first smart camera simultaneously.

For example, the server may issue the token to the terminal and the first smart camera once every hour, and a validity period of the token is one hour.

Therefore, the token received by the terminal, may be generated randomly by the server after the server receives the password acquiring request sent by the first smart camera and sent by the server to the terminal and the first smart camera simultaneously. Or, the token may be generated by the server periodically and sent by the server to the terminal and the first smart camera simultaneously.

The server sends the token to the terminal and the first smart camera simultaneously, so that the terminal may verify the access password in the access request of the terminal with the token when receiving the access request, after the terminal receives the token.

In addition, the terminal may also receive the validity period of the token issued by the server after receiving the token issued by the server.

At block 530, it is judged whether the token period of the token has passed. If the validity period of the token has not passed, block 540 is executed; otherwise, block 560 is executed.

At block 540, it is determined that the access password is verified successfully.

In an embodiment of the present invention, if the validity period of the token has not passed, it indicates that the token is still valid, such that the token may be used for verification. If the validity period of the token has passed, it indicates that the token becomes invalid, such that the token cannot be used for verification.

At block 550, the access of the terminal is accepted, and the process ends.

At block 560, the access of the terminal is refused, and the process ends.

It can be seen from the above embodiment that, the first access request carrying the access password sent by the terminal is received through the local area network, it is judged whether the access password is the same as the token stored in local and issued by the terminal, it is judged whether the validity period of the token has passed if the access password is the same as the token, and it is determined that access password is verified successfully and the access of the terminal is accepted if the validity period of the token has not passed, such that the first smart camera cannot accept the access of the terminal after the token is out of validity, thus improving the safety and reliability of accessing the smart camera.

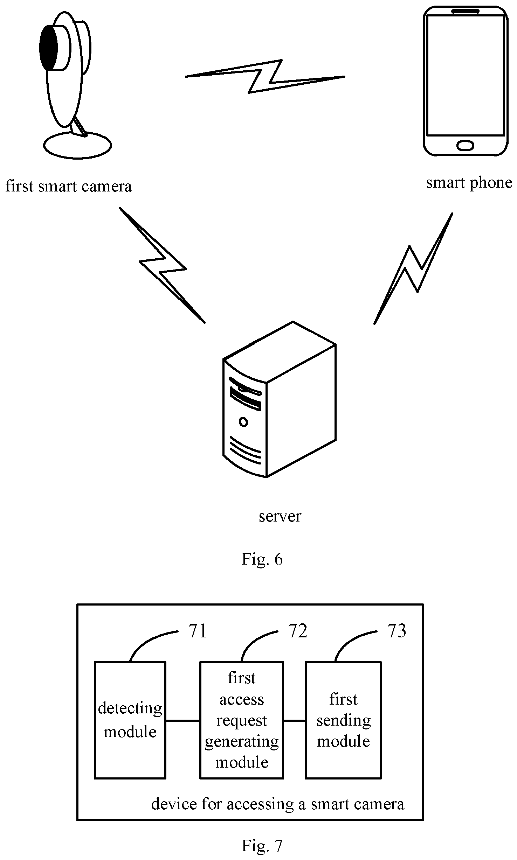

As shown in Fig. 6, Fig. 6 shows a schematic diagram illustrating an application scenario of a method for accessing a smart camera according to an embodiment of the present invention. The application scenario includes a smart phone used as a terminal, a first smart camera and a server.

When a user needs to access the first smart camera via the smart phone, the smart phone may detect access media for accessing the first smart camera.

The smart phone generates a first access request carrying an access password after detecting that the access media is local area network, and sends the first access request to the first smart camera through the local area network. Accordingly, the first smart camera verifies the access password in the first access request after receiving the first access request sent by the terminal through the local area network, and accepts an access of the terminal if the access password is verified successfully.

The access password may be an access password inputted by the user or a token issued by the server.

In the application scenario shown in Fig. 6, regarding the specific process of accessing the smart camera, reference may be made to the description of Fig. 1-Fig. 5, which is not described herein.

Corresponding to embodiments of the method for accessing a smart camera, the present invention further provides embodiments of the device for accessing a smart camera.

As shown in Fig. 7, Fig. 7 shows a block diagram of a device for accessing a smart camera according to an example embodiment of the present disclosure. The device may be applied in a terminal and used for executing the method for accessing a smart camera shown in Fig. 1. The device may include a detecting module 71, a first access request generating module 72 and a first sending module 73.

The detecting module 71 is configured to detect access media for accessing a first smart camera.

The first access request generating module 72 is configured to generate a first access request corresponding to the access media if it is detected that the access media is local area network, in which the first access request carries an access password.

The first sending module 73 is configured to send the first access request to the first smart camera, such that the first smart camera accepts an access after verifying the access password in the first access request successfully.

It can be seen from the above embodiment that, by detecting the access media for accessing the first smart camera, generating the corresponding first access request carrying the access password if it is detected that the access media is the local area network, and sending the first access request to the first smart camera to enable the first smart camera to accept the access after the access password in the first access request is verified successfully by the first smart camera, the first smart camera may be accessed by adopting the access authentication mechanism based on local devices when the terminal and the first smart camera are located in the same local area network but cannot access the Internet, such that the safety of accessing the smart camera is improved, user's personal requirement for accessing the smart camera is satisfied, and user experience is improved.

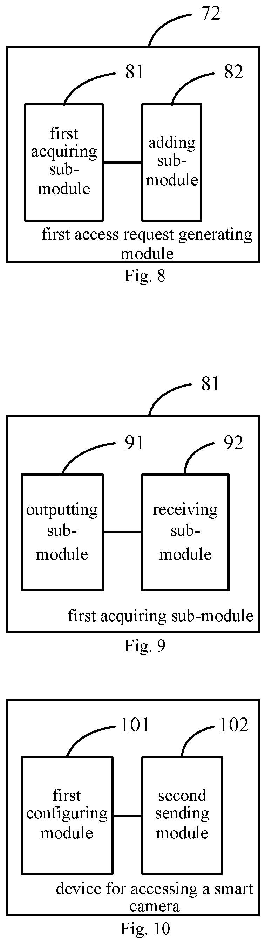

As shown in Fig. 8, Fig. 8 shows a block diagram of another device for accessing a smart camera according to an example embodiment of the present invention. Based on the embodiment shown in Fig. 7, in this embodiment, the first access request generating module 72 may include a first acquiring sub-module 81 and an adding sub-module 82.

The first acquiring sub-module 81 is configured to acquire the access password.

The adding sub-module 82 is configured to add the access password into the first access request.

As shown in Fig. 9, Fig. 9 shows a block diagram of another device for accessing a smart camera according to an example embodiment of the present invention. Based on the embodiment shown in Fig. 8, in this embodiment, the access password is an access password inputted by a user, and the first acquiring sub-module 81 may include an outputting sub-module 91 and a receiving sub-module 92.

The outputting sub-module 91 is configured to output an access password input interface.

The receiving sub-module 92 is configured to receive the access password inputted by the user in the access password input interface.

As shown in Fig. 10, Fig. 10 shows a block diagram of another device for accessing a smart camera according to an example embodiment of the present invention. Based on the embodiment shown in Fig. 9, in this embodiment, the device may include a first configuring module 101 and a second sending module 102.

The first configuring module 101 is configured to configure an appointed password with the first smart camera before the first smart camera is accessed.

The second sending module 102 is configured to send the appointed password to the first smart camera, such that the first smart camera stores the appointed password, and accepts the access after determining that the appointed password is the same as the access password inputted by the user and contained in the first access request.

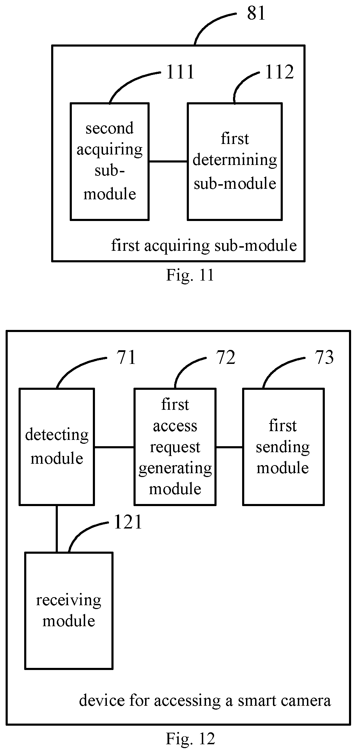

As shown in Fig. 11, Fig. 11 shows a block diagram of another device for accessing a smart camera according to an example embodiment of the present invention. Based on the embodiment shown in Fig. 8, in this embodiment, the access password is a token issued by a server, and the first acquiring sub-module 81 may include a second acquiring sub-module 111 and a first determining sub-module 112.

The second acquiring sub-module 111 is configured to acquire the token issued by the server.

The first determining sub-module 112 is configured to determine the token as the access password.

It can be seen from the above embodiment that, the access password may be acquired in many ways, and the acquired access password is added into the first access request and used by the first smart camera for performing a safety verification. The access password may be a password preset by the terminal, a password inputted by the user or a password issued by the server. The scope of source of the access password is expanded, such that the efficiency and availability of accessing the smart camera are improved.

As shown in Fig. 12, Fig. 12 shows a block diagram of another device for accessing a smart camera according to an example embodiment of the present invention. Based on the embodiment shown in Fig. 11, in this embodiment, the device may further include a receiving module 121.

The receiving module 121 is configured to receive the token and a validity period of the token issued by the server, in which the token is generated randomly by the server after the server receives a password acquiring request sent by the first smart camera, and is sent by the server to a terminal and the first smart camera simultaneously; or the token is generated by the server periodically, and is sent by the server to a terminal and the first smart camera simultaneously.

It can be seen from the above embodiment that, a corresponding second access request is generated if it is detected that the access media includes the Internet. The second access request carries a user account and a device identification of the first smart camera. The second access request is sent to the server, such that the server transfers the second access request to the first smart camera after determining that the user account and the device identification of the first smart camera in the second access request are bounded to each other. In this way, the terminal gives priority to adopt the authentication mechanism based on server when the terminal can access the Internet, such that the speed of accessing the smart camera may be further improved.

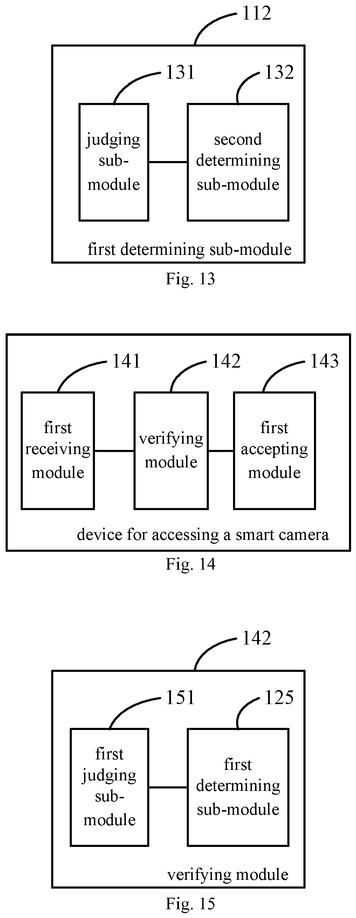

As shown in Fig. 13, Fig. 13 shows a block diagram of another device for accessing a smart camera according to an example embodiment of the present invention. Based on the embodiment shown in Fig. 12, in this embodiment, the first determining sub-module 112 may include a judging sub-module 131 and a second determining sub-module 132.

The judging sub-module 131 is configured to judge whether the validity period of the token has passed.

The second determining sub-module 132 is configured to determine the token as the access password if the validity period of the token has not passed.

It can be seen from the above embodiment that, after the token is out of validity, the terminal cannot access the first smart camera through the local area network, but wait for another valid token issued by the server, such that the safety and reliability of accessing the smart camera are improved.

As shown in Fig. 14, Fig. 14 shows a block diagram of a device for accessing a smart camera according to an example embodiment of the present invention. The device may be applied in a first smart camera, and the first smart camera is a smart camera to be accessed and used for executing the method for accessing a smart camera shown in Fig. 4. The device may include a first receiving module 141, a verifying module 142 and a first accepting module 143.

The first receiving module 141 is configured to receive a first access request sent by a terminal through local area network, in which the first access request carries an access password.

The verifying module 142 is configured to verify the access password.

The first accepting module 143 is configured to accept an access of the terminal if the access password is verified successfully.

It can be seen from above embodiment that, by receiving the first access request carrying the access password sent by the terminal through the local area network, verifying the access password and accepting the access of the terminal if the access password is verified successfully, the first access request may be verified by adopting an access authentication mechanism based on local devices when the first smart camera and the terminal are located in the same local area network but cannot access the Internet, such that the safety of accessing the smart camera is improved, user's personal requirement for accessing the smart camera is satisfied, and user experience is improved.

As shown in Fig. 15, Fig. 15 shows a block diagram of another device for accessing a smart camera according to an example embodiment of the present invention. Based on the embodiment shown in Fig. 14, in this embodiment, the verifying module 142 may include a first judging sub-module 151 and a first determining sub-module 152.

The first judging sub-module 151 is configured to judge whether the access password is the same as an appointed password stored in local.

The first determining sub-module 152 is configured to determine that the access password is verified successfully if the access password is the same as the appointed password.

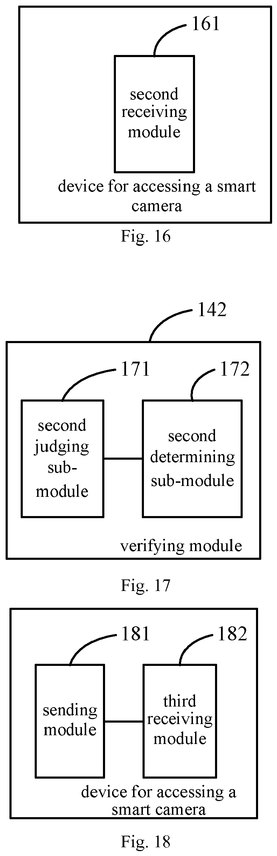

As shown in Fig. 16, Fig. 16 shows a block diagram of another device for accessing a smart camera according to an example embodiment of the present invention. Based on the embodiment shown in Fig. 15, in this embodiment, the device may further include a second receiving module 161.

The second receiving module 161 is configured to receive the appointed password sent by the terminal, in which the appointed password is a password appointed by the terminal and the first smart camera.

As shown in Fig. 17, Fig. 17 shows a block diagram of another device for accessing a smart camera according to an example embodiment of the present invention. Based on the embodiment shown in Fig. 14, in this embodiment, the verifying module 142 may include a second judging sub-module 171 and a second determining sub-module 172.

The second judging sub-module 171 is configured to judge whether the access password is the same as a token stored in local, wherein the token is a password issued by a server.

The second determining sub-module 172 is configured to determine that the access password is verified successfully if the access password is the same as the token.

As shown in Fig. 18, Fig. 18 shows a block diagram of another device for accessing a smart camera according to an example embodiment of the present invention. Based on the embodiment shown in Fig. 17, in this embodiment, the device may further include a sending module 181 and a third receiving module 182.

The sending module 181 is configured to send a password acquiring request to the server, such that the server generates the token randomly according to the password acquiring request and sends the token to the terminal and the first smart camera simultaneously.

The third receiving module 182 is configured to receive the token and a validity period of the token issued by the server.

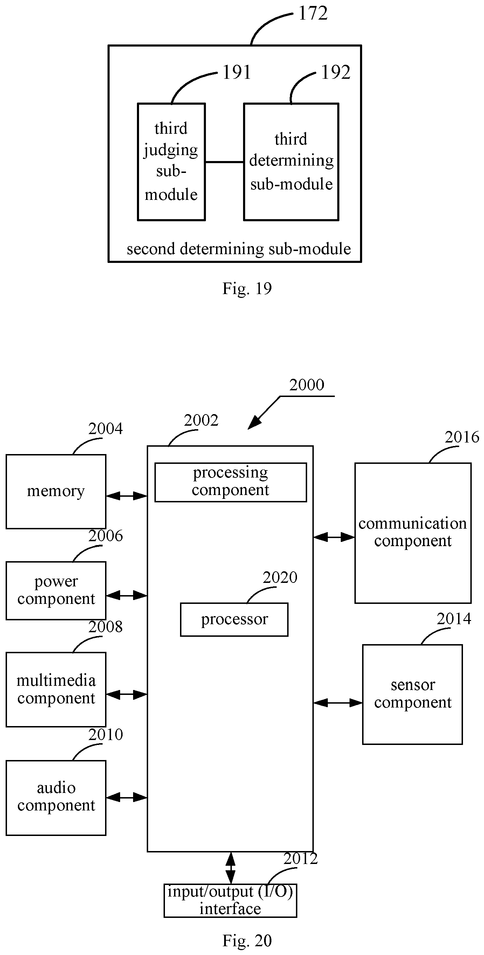

As shown in Fig. 19, Fig. 19 shows a block diagram of another device for accessing a smart camera according to an example embodiment of the present invention. Based on the embodiment shown in Fig. 18, in this embodiment, the second determining sub-module 172 may further include a third judging sub-module 191 and a third determining sub-module 192.

The third judging sub-module 191 is configured to judge whether the validity period of the token has passed if the access password is the same as the token.

The third determining sub-module 192 is configured to determine that the access password is verified successfully if the validity period of the token has not passed.

It can be seen from the above embodiment that, after the token is out of validity, the first smart camera cannot accept the access, such that the safety and reliability of accessing the smart camera are improved.

Corresponding to Fig. 7, the present disclosure further provides another device for accessing the smart camera, the device may applied in the terminal, including:
a processor; and
a memory configured to store instructions executable by the processor;
in which the processor is configured to:
   detect access media for accessing a first smart camera;
   generate a first access request corresponding to the access media if it is detected that the access media is local area network, in which the first access request carries an access password; and
   send the first access request to the first smart camera, such that the first smart camera accepts an access after verifying the access password in the first access request successfully.

Corresponding to Fig. 14, the present disclosure further provides another device for accessing the smart camera, the device may applied in the first smart camera, including:
a processor; and
a memory configured to store instructions executable by the processor;
in which the processor is configured to:
   detect access media for accessing a first smart camera;
   generate a first access request corresponding to the access media if it is detected that the access media is local area network, in which the first access request carries an access password; and
   send the first access request to the first smart camera, such that the first smart camera accepts an access after verifying the access password in the first access request successfully.

With respect to the apparatuses in the above embodiments, the specific manners for performing functions and operations for individual units therein have been described in detail in the embodiments regarding the methods above, which will not be elaborated herein.

Embodiments of the devices correspond to embodiments of the methods. For a related content, reference is made to partial descriptions of the embodiments of the methods. The above embodiments of the devices are exemplary. Units described as separate components may be or may not be physically separated. Components shown as units may be or may not be physical units, in other words, may be integrated on one position or distributed to a plurality of network units. Some or all of the modules may be selected to achieve the objective of the solution of the embodiments according to actual requirements. Those skilled in the art may understand and implement the present disclosure without making creative efforts.

Fig. 20 shows a block diagram of a device 2000 for accessing a smart camera according to an example embodiment of the present invention, on the terminal side. For example, the device 2000 may be a mobile phone, a computer, a digital broadcasting terminal, a messaging device, a game console, a tablet device, a medical device, an exercise equipment, and a personal digital assistant, etc.

Referring to Fig. 20, the device 2000 may include one or more of following components: a processing component 2002, a memory 2004, a power component 2006, a multimedia component 2008, an audio component 2010, an input/output (I/O) interface 2012, a sensor component 2014, and a communication component 2016.

The processing component 2002 typically controls overall operations of the device 2000, such as the operations associated with display, telephone calls, data communications, camera operations, and recording operations. The processing component 2002 may include one or more processors 2020 to execute instructions to perform all or part of the steps in the above described methods. Moreover, the processing component 2002 may include one or more modules which facilitate the interaction between the processing component 2002 and other components. For instance, the processing component 2002 may include a multimedia module to facilitate the interaction between the multimedia component 2008 and the processing component 2002.

The memory 2004 is configured to store various types of data to support the operation of the device 2000. Examples of such data include instructions for any applications or methods operated on the device 2000, contact data, phonebook data, messages, pictures, video, etc. The memory 2004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2006 provides power to various components of the device 2000. The power component 2006 may include a power management system, one or more power sources, and any other components associated with the generation, management, and distribution of power in the device 2000.

The multimedia component 2008 includes a screen providing an output interface between the device 2000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 2008 includes a front camera and/or a rear camera. The front camera and the rear camera may receive external multimedia data while the device 2000 is in an operation mode, such as a photographing mode or a video mode. Each of the front camera and the rear camera may be a fixed optical lens system or have focus and optical zoom capability.

The audio component 2010 is configured to output and/or input audio signals. For example, the audio component 2010 includes a microphone (MIC) configured to receive an external audio signal when the device 2000 is in an operation mode, such as a call mode, a recording mode, and a voice recognition mode. The received audio signal may be further stored in the memory 2004 or transmitted via the communication component 2016. In some embodiments, the audio component 2010 further includes a speaker to output audio signals.

The I/O interface 2012 provides an interface between the processing component 2002 and peripheral interface modules, such as a keyboard, a click wheel, buttons, and the like. The buttons may include, but are not limited to, a home button, a volume button, a starting button, and a locking button.

The sensor component 2014 includes one or more sensors to provide status assessments of various aspects of the device 2000. For instance, the sensor component 2014 may detect an open/closed status of the device 2000 and relative positioning of components (e.g., the display and the keypad of the device 2000). The sensor component 2014 may also detect a change in position of the device 2000 or of a component in the device 2000, a presence or absence of user contact with the device 2000, an orientation or an acceleration/deceleration of the device 2000, and a change in temperature of the device 2000. The sensor component 2014 may include a proximity sensor configured to detect the presence of nearby objects without any physical contact. The sensor component 2014 may also include a light sensor, such as a CMOS or CCD image sensor, for use in imaging applications. In some embodiments, the sensor component 2014 may also include an accelerometer sensor, a gyroscope sensor, a magnetic sensor, a pressure sensor, or a temperature sensor.

The communication component 2016 is configured to facilitate wired or wireless communication between the device 2000 and other devices. The device 2000 can access a wireless network based on a communication standard, such as WIFI, 2G, or 3G, or a combination thereof. In one exemplary embodiment, the communication component 2016 receives a broadcast signal or broadcast associated information from an external broadcast management system via a broadcast channel. In one exemplary embodiment, the communication component 2016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 2004 including instructions. The above instructions are executable by the processor 2020 in the device 2000, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for accessing a smart camera, applied by a system comprising a terminal and a server, comprising:
detecting, by the terminal, access media for accessing a first smart camera;
generating, by the terminal, a first access request corresponding to the access media if it is detected that the access media is local area network, wherein the first access request carries an access password; and
sending, by the terminal, the first access request to the first smart camera, such that the first smart camera accepts an access after verifying the access password in the first access request successfully; wherein the access password is a token issued by the server; and
the method further comprises:
generating periodically, by the server, the token;
issuing, by the server, the token and a validity period;
sending, by the server, the token simultaneously to the first smart camera and the terminal;
receiving, by the terminal, the token and the validity period of the token issued by the server;
judging, by the terminal, whether the validity period of the token has passed; and
when the validity period of the token has not passed, determining, by the terminal, the token as the access password, updating, by the terminal, the token stored previously, and adding, by the terminal, the token in the first access request.

2. The method according to claim 1, wherein the method further comprises:
receiving, by the server, a password acquiring request sent by the first smart camera,
generating randomly, by the server, the token,
issuing, by the server, the token and the validity period of the token;
sending, by the server, the token simultaneously to the terminal and the first smart camera.

3. A method for accessing a smart camera, applied by a system comprising a server and the smart camera, comprising:
receiving, by the smart camera, a first access request sent by a terminal through local area network, wherein the first access request carries an access password, wherein the access password is a token issued by a server;
verifying, by the smart camera, the access password, comprising:
generating periodically, by the server, the token;
issuing, by the server, the token and a validity period of the token;
sending, by the server, the token simultaneously to the terminal and to the smart camera;
receiving, by the smart camera, the token and a validity period of the token and storing, by the smart camera, the token in local;
judging, by the smart camera, whether the access password is the same as the token stored in local, wherein the token is a password issued by the server; judging, by the smart camera, whether the validity period of the token has passed if the access password is the same as the token; and when the validity period of the token has not passed, determining, by the smart camera, that the access password is verified successfully; and
accepting, by the smart camera, an access of the terminal if the access password is verified successfully.

4. The method according to claim 3, further comprising:
sending, by the smart camera, a password acquiring request to the server,
generating randomly, by the server, the token according to the password acquiring request;
issuing, by the server, the token and the validity period of the token;
receiving, by the smart camera, the token and the validity period of the token.

5. A system comprising a device, applicable in a terminal, and a server for accessing a smart camera, the device comprising:
a detecting module (71), configured to detect access media for accessing a first smart camera;
a first access request generating module (72), configured to generate a first access request corresponding to the access media if it is detected that the access media is local area network, wherein the first access request carries an access password; and
a first sending module (73), configured to send the first access request to the first smart camera, such that the first smart camera accepts an access after verifying the access password in the first access request successfully, wherein the access password is a token issued by a server
the device further comprises a receiving module (121), configured to receive, at the same time of the server sending the token to the smart camera, the token and a validity period of the token issued by the server when the server periodically generates the token, and storing the token;
the first access request generating module (72) is further configured to:
judge whether the validity period of the token has passed; and
when the validity period of the token has not passed, determining the token as the access password, updating the token stored previously, and adding the token in the first access request; wherein the server being configured to periodically generate the token, to issue the token and a validity period of the token, and to send the token simultaneously to the smart camera and to the terminal.

6. The device according to claim 5, wherein
the server is further configured to receive a password acquiring request sent by the first smart camera, to randomly generate the token, to issue the token and the validity period of the token, and to send the token simultaneously to the smart camera and to the terminal.

7. A system comprising a device, applicable in a smart camera, and a server for accessing a smart camera, the device comprising:
a first receiving module (141), configured to receive a first access request sent by a terminal through local area network, wherein the first access request carries an access password, wherein the access password is a token issued by a server;
a verifying module (142), configured to verify the access password; and
a first accepting module (143), configured to accept an access of the terminal if the access password is verified successfully,
the verifying module (142) is further configured to:
receive, at the same time of the server sending the token to the terminal, the token and a validity period of the token issued by the server when the server periodically generates the token, and storing the token in local;
judge whether the access password is the same as the token stored in local, in which the token is a password issued by a server;
judge whether the validity period of the token has passed if the access password is the same as the token; and
when the validity period of the token has not passed, determine that the access password is verified successfully;
wherein the server being configured to periodically generate the token, to issue the token and a validity period of the token and to send to token simultaneously to the smart camera and to the terminal.

## Patentansprüche

1. Verfahren zum Zugriff auf eine Smart Kamera, das von einem System angewendet wird, das ein Terminal und einen Server aufweist, umfassend:
Erfassen, durch das Terminal, von Zugriffsmedien für den Zugriff auf eine erste Smart Kamera;
Erzeugen, durch das Terminal, einer ersten Zugriffsanforderung, die den Zugriffsmedien entspricht, wenn erfasst wird, dass es sich bei den Zugriffsmedien um ein Local Area Network handelt, wobei die erste Zugriffsanforderung ein Zugriffspasswort trägt; und
Senden , durch das Terminal, der ersten Zugriffsanforderung an die erste Smart Kamera, so dass die erste Smart Kamera einen Zugriff akzeptiert, nachdem das Zugriffspasswort in der ersten Zugriffsanforderung erfolgreich verifiziert wurde; wobei das Zugriffspasswort ein vom Server ausgegebenes Token ist; und
wobei das Verfahren ferner umfasst:
Periodisches Erzeugen, durch den Server, des Tokens;
Ausgeben, durch den Server, des Tokens und eines Gültigkeitszeitraums;
Senden, durch den Server, des Token gleichzeitig an die erste Smart Kamera und das Terminal;
Empfangen, durch das Terminal, des Token und des Gültigkeitszeitraums des vom Server ausgegebenen Tokens;
Beurteilen, durch das Terminal, ob der Gültigkeitszeitraum des Tokens abgelaufen ist; und
wenn der Gültigkeitszeitraum des Tokens noch nicht abgelaufen ist, Bestimmen, durch das Terminal, des Tokens als Zugriffspasswort, Aktualisieren, durch das Terminal des zuvor gespeicherten Tokens und Hinzufügen, durch das Terminal, des Tokens in der ersten Zugriffsanforderung.

2. Verfahren nach Anspruch 1, wobei das Verfahren ferner umfasst:
Empfangen, durch den Server, einer von der ersten Smart Kamera gesendeten Passwortakqui seanforderung,
Zufälliges Erzeugen, durch den Server, des Tokens,
Ausgeben, durch den Server, des Token und des Gültigkeitszeitraums des Token;
Senden, durch den Server, des Token gleichzeitig an das Terminal und die erste Smart Kamera.

3. Verfahren zum Zugriff auf eine Smart Kamera, das von einem System angewendet wird, das einen Server und die Smart Kamera aufweist, das folgendes umfasst:
Empfangen, durch die Smart Kamera, einer ersten Zugriffsanforderung, die von einem Terminal über ein Local Area Network gesendet wird, wobei die erste Zugriffsanforderung ein Zugriffspasswort trägt, wobei das Zugriffspasswort ein von einem Server ausgegebenes Token ist;
Verifizieren, durch die Smart Kamera, des Zugriffspassworts, umfassend:
Periodisches Erzeugen, durch den Server, des Tokens;
Ausgeben, durch den Server, des Tokens und eines Gültigkeitszeitraumes des Tokens;
Senden, durch den Server, des Tokensgleichzeitig an das Terminal und an die Smart Kamera;
Empfangen, durch die Smart Kamera, des Tokens und eines Gültigkeitszeitraumes des Tokens und lokales Speichern, durch die Smart Kamera, des Tokens;
Beurteilen, durch die Smart Kamera, ob das Zugriffspasswort das gleiche ist wie das lokal gespeicherte Token, wobei das Token ein vom Server ausgegebenes Passwort ist; Beurteilen, durch die Smart Kamera, ob der Gültigkeitszeitraum des Token abgelaufen ist, wenn das Zugriffspasswort mit dem Token übereinstimmt; und wenn der Gültigkeitszeitraum des Tokens nicht abgelaufen ist, Bestimmen, durch die Smart Kamera, dass das Zugriffspasswort erfolgreich verifiziert wurde; und
Akzeptieren, durch die Smart Kamera, eines Zugriffs auf das Terminal, wenn das Zugriffspasswort erfolgreich verifiziert wurde.

4. Verfahren nach Anspruch 3, ferner umfassend:
Senden, durch die Smart Kamera, einer Passwortakquiseanforderung an den Server,
Zufälliges Erzeugen, durch den Server, des Tokens gemäß der Passwortakquiseanforderung;
Ausgeben, durch den Server, des Tokens und des Gültigkeitszeitraumes des Tokens;
Empfangen, durch die Smart Kamera, des Tokens und des Gültigkeitszeitraumes des Tokens.

5. System, das eine Vorrichtung, die in einem Terminal anwendbar ist, und einen Server zum Zugriff auf eine Smart Kamera aufweist, wobei die Vorrichtung folgendes aufweist:
ein Erfassungsmodul (71), das konfiguriert ist, um Zugriffsmedien für den Zugriff auf eine erste Smart Kamera zu erfassen;
ein erstes Zugriffsanforderungserzeugungsmodul (72), das konfiguriert ist, um eine erste Zugriffsanforderung zu erzeugen, die den Zugriffsmedien entspricht, wenn erfasst wird, dass die Zugriffsmedien ein Local Area Network sind, wobei die erste Zugriffsanforderung ein Zugriffspasswort trägt; und
ein erstes Sendemodul (73), das konfiguriert ist, um die erste Zugriffsanforderung an die erste Smart Kamera zu senden, so dass die erste Smartkamera einen Zugriff akzeptiert, nachdem das Zugriffspasswort in der ersten Zugriffsanforderung erfolgreich verifiziert wurde, wobei das Zugriffspasswort ein von einem Server ausgegebenes Token ist;
wobei die Vorrichtung ferner ein Empfangsmodul (121) umfasst, das konfiguriert ist, um gleichzeitig, während der Server das Token an die Smart Kamera sendet, das Token und einen Gültigkeitszeitraum des vom Server ausgegebenen Token zu empfangen, wenn der Server das Token periodisch erzeugt, und das Token zu speichern;
wobei das erste Zugriffsanforderungserzeugungsmodul (72) ferner konfiguriert ist, um:
zu beurteilen, ob der Gültigkeitszeitraum des Tokens abgelaufen ist; und
wenn die Gültigkeitsdauer des Tokens noch nicht abgelaufen ist, Bestimmen des Tokens als das Zugangspasswort, Aktualisieren des zuvor gespeicherten Tokens und Hinzufügen des Tokens in der ersten Zugriffsanforderung;
wobei der Server konfiguriert ist, um das Token periodisch zu erzeugen, das Token und einen Gültigkeitszeitraum des Tokens auszugeben und das Token gleichzeitig an die Smart Kamera und an das Terminal zu senden.

6. Vorrichtung nach Anspruch 5, wobei
der Server ferner konfiguriert ist, um eine von der ersten Smart Kamera gesendete Passwortakquiseanforderung zu empfangen, das Token zufällig zu erzeugen, das Token und den Gültigkeitszeitraum des Tokens auszugeben und das Token gleichzeitig an die Smart Kamera und an das Terminal zu senden.

7. System, aufweisend eine Vorrichtung, die in einer Smart Kamera anwendbar ist, und einen Server zum Zugriff auf eine Smart Kamera, wobei die Vorrichtung aufweist:
ein erstes Empfangsmodul (141), das konfiguriert ist, um eine erste Zugriffsanforderung zu empfangen, die von einem Terminal über ein Local Area Network gesendet wird, wobei die erste Zugriffsanforderung ein Zugriffspasswort trägt, wobei das Zugriffspasswort ein von einem Server ausgegebenes Token ist;
ein Verifizierungsmodul (142), das konfiguriert ist, um das Zugangspasswort zu verifizieren; und
ein erstes Akzeptanzmodul (143), das konfiguriert ist, um einen Zugriff auf das Terminal zu akzeptieren, wenn das Zugriffspasswort erfolgreich verifiziert wurde,
wobei das Verifizierungsmodul (142) ferner konfiguriert ist, um:
das Token und einen Gültigkeitszeitraum des vom Server ausgegebenen Tokens gleichzeitig zu empfangen, wenn der Server den Token periodisch erzeugt, wenn der Server das Token an das Terminal sendet und lokales Speichern des Tokens;
beurteilen, ob das Zugriffspasswort mit dem lokal gespeicherten Token übereinstimmt, bei dem es sich um ein von einem Server ausgegebenes Passwort handelt;
beurteilen, ob die Gültigkeitsdauer des Tokens abgelaufen ist, wenn das Zugangspasswort mit dem Token übereinstimmt; und
wenn der Gültigkeitszeitraum des Tokens noch nicht abgelaufen ist, bestimmen, dass das Zugriffspasswort erfolgreich verifiziert wurde,
wobei der Server konfiguriert ist, um das Token periodisch zu erzeugen, das Token und einen Gültigkeitszeitraum des Tokens auszugeben und gleichzeitig [zu] das Token an die Smart Kamera und an das Terminal zu senden.

## Revendications

1. Procédé pour accéder à une caméra intelligente, appliqué par un système comportant un terminal et un serveur, comportant les étapes consistant à :
détecter, par le terminal, un média d'accès pour accéder à une première caméra intelligente ;
générer, par le terminal, une première demande d'accès correspondant au média d'accès s'il est détecté que le média d'accès est un réseau local, dans lequel la première demande d'accès contient un mot de passe d'accès ; et
envoyer, par le terminal, la première demande d'accès à la première caméra intelligente, de telle sorte que la première caméra intelligente accepte un accès après vérification réussie du mot de passe d'accès dans la première demande d'accès ;
dans lequel le mot de passe d'accès est un jeton émis par le serveur ; et
le procédé comporte en outre les étapes consistant à :
générer périodiquement, par le serveur, le jeton ;
émettre, par le serveur, le jeton et une période de validité ;
envoyer, par le serveur, le jeton simultanément à la première caméra intelligente et au terminal ;
recevoir, par le terminal, le jeton et la période de validité du jeton émis par le serveur ;
juger, par le terminal, si la période de validité du jeton est dépassée ; et
lorsque la période de validité du jeton n'est pas dépassée, déterminer, par le terminal, que le jeton est le mot de passe d'accès, mettre à jour, par le terminal, le jeton précédemment stocké, et ajouter, par le terminal, le jeton dans la première demande d'accès.

2. Procédé selon la revendication 1, dans lequel le procédé comporte en outre les étapes consistant à :
recevoir, par le serveur, une demande d'acquisition de mot de passe envoyée par la première caméra intelligente, générer, par le serveur, le jeton de manière aléatoire, émettre, par le serveur, le jeton et la période de validité du jeton ;
envoyer, par le serveur, le jeton simultanément au terminal et à la première caméra intelligente.

3. Procédé pour accéder à une caméra intelligente, appliqué par un système comportant un serveur et la caméra intelligente, comportant les étapes consistant à :
recevoir, par la caméra intelligente, une première demande d'accès envoyée par un terminal via un réseau local, dans lequel la première demande d'accès contient un mot de passe d'accès, dans lequel le mot de passe d'accès est un jeton émis par un serveur ;
la vérification, par la caméra intelligente, du mot de passe d'accès, comportant les étapes consistant à :
générer, par le serveur, le jeton de manière périodique ;
émettre, par le serveur, le jeton et une période de validité du jeton ;
envoyer, par le serveur, le jeton simultanément au terminal et à la caméra intelligente ;
recevoir, par la caméra intelligente, le jeton et une période de validité du jeton et stocker, par la caméra intelligente, le jeton en local ;
juger, par la caméra intelligente, si le mot de passe d'accès est le même que le jeton stocké en local, dans lequel le jeton est un mot de passe émis par le serveur ; juger, par la caméra intelligente, si la période de validité du jeton est dépassée si le mot de passe d'accès est le même que le jeton ; et lorsque la période de validité du jeton n'est pas dépassée, déterminer, par la caméra intelligente, que le mot de passe d'accès est vérifié avec succès ; et
accepter, par la caméra intelligente, un accès du terminal si le mot de passe d'accès est vérifié avec succès.

4. Procédé selon la revendication 3, comportant en outre les étapes consistant à :
envoyer au serveur, par la caméra intelligente, une demande d'acquisition de mot de passe,
générer, par le serveur, le jeton de manière aléatoire en fonction de la demande d'acquisition de mot de passe ;
émettre, par le serveur, le jeton et la période de validité du jeton ;
recevoir, par la caméra intelligente, le jeton et la période de validité du jeton.

5. Système comportant un dispositif, applicable dans un terminal, et un serveur pour accéder à une caméra intelligente, le dispositif comportant :
un module de détection (71), configuré pour détecter un média d'accès pour accéder à une première caméra intelligente ;
un premier module de génération de demande d'accès (72), configuré pour générer une première demande d'accès correspondant au média d'accès s'il est détecté que le média d'accès est un réseau local, dans lequel la première demande d'accès contient un mot de passe d'accès ; et
un premier module d'envoi (73), configuré pour envoyer la première demande d'accès à la première caméra intelligente, de telle sorte que la première caméra intelligente accepte un accès après vérification réussie du mot de passe d'accès dans la première demande d'accès, dans lequel le mot de passe d'accès est un jeton émis par un serveur,
le dispositif comporte en outre un module de réception (121), configuré pour recevoir, en même temps que le serveur envoie le jeton à la caméra intelligente, le jeton et une période de validité du jeton émis par le serveur lorsque le serveur génère périodiquement le jeton, et stocker le jeton ;
le premier module de génération de demande d'accès (72) est en outre configuré pour :
juger si la période de validité du jeton est dépassée ; et
lorsque la période de validité du jeton n'est pas dépassée, déterminer que le jeton est le mot de passe d'accès, mettre à jour le jeton stocké précédemment, et ajouter le jeton dans la première demande d'accès ;
dans lequel le serveur est configuré pour générer périodiquement le jeton, pour émettre le jeton et une période de validité du jeton, et pour envoyer le jeton simultanément à la caméra intelligente et au terminal.

6. Dispositif selon la revendication 5, dans lequel le serveur est en outre configuré pour recevoir une demande d'acquisition de mot de passe envoyée par la première caméra intelligente, pour générer le jeton de manière aléatoire, pour émettre le jeton et la période de validité du jeton, et pour envoyer le jeton simultanément à la caméra intelligente et au terminal.

7. Système comportant un dispositif, applicable dans une caméra intelligente, et un serveur pour accéder à une caméra intelligente, le dispositif comportant :
un premier module de réception (141), configuré pour recevoir une première demande d'accès envoyée par un terminal via un réseau local, dans lequel la première demande d'accès contient un mot de passe d'accès, dans lequel le mot de passe d'accès est un jeton émis par un serveur ;
un module de vérification (142), configuré pour vérifier le mot de passe d'accès ; et
un premier module d'acceptation (143), configuré pour accepter un accès du terminal si le mot de passe d'accès est vérifié avec succès,
le module de vérification (142) est en outre configuré pour
recevoir, en même temps que le serveur envoie le jeton au terminal, le jeton et une période de validité du jeton émis par le serveur lorsque le serveur génère périodiquement le jeton, et stocker le jeton en local ;
juger si le mot de passe d'accès est le même que le jeton stocké en local, dans lequel le jeton est un mot de passe émis par un serveur ;
juger si la période de validité du jeton est dépassée si le mot de passe d'accès est le même que le jeton ; et
lorsque la période de validité du jeton n'est pas dépassée, déterminer que le mot de passe d'accès est vérifié avec succès ;
dans lequel le serveur est configuré pour générer périodiquement le jeton, pour émettre le jeton et une période de validité du jeton, et pour envoyer le jeton simultanément à la caméra intelligente et au terminal.
